# EUROPEAN PATENT APPLICATION

(11) **EP 0 980 053 A2**
(43) Date of publication of application: **16.02.2000**
(21) Application number: 99402040.2
(22) Date of filing: 11.08.1999
(51) Int. Cl.: G07F 7/10, G07F 19/00, G06F 17/60, G06K 19/07

(54) **Advanced plastic card for financial and informational transactions**

(30) Priority: 11.08.1998 US 96185 P
(71) Applicant: CITIBANK, N.A., New York, New York 10043 (US)
(72) Inventor: Hooper, William D., New Hope, PA 18938 (US)
(74) Representative: Loisel, Bertrand

(57) **Abstract**

The present invention is an improvement to plastic cards such that a cardholder may use his card as a stand alone device to receive and transmit messages as well as to make financial transactions and inquiries. The card is implemented with a touch screen, a processor and memories. The cardholder uses the touch screen to imput data into the processor and receive data from the processor. The card is also implemented with an antenna and a communications circuit for wireless communications. To support the functionality of the card, a server is also described to assist in bendling messages and financial transactions.

## Description

### CONTINUING DATA

This application claims priority to United States provisional application 60/096,185 filed on August 11, 1998, which is incorporated herein by reference.

### FIELD OF THE INVENTION

This invention relates generally to plastic credit or automatic teller machine (ATM) or customer access terminal (CAT) cards, and in particular to how these cards can be used to receive communications via a wireless service. These cards are also implemented with a microprocessor and memory which are used to provide information to a card reader via contacts or the wireless connection as well as the cardholder via a microtouch screen. Additionally, the microtouch screen is used not only to provide information to the cardholder but also to receive data from the cardholder. This data controls functions of the microprocessor, memory, and external machines and systems.

### BACKGROUND OF THE INVENTION

Today, virtually everyone in the United States carries a standard credit card or bank card. These cards contain a magnetic stripe on one side that is used to communicate with a central computer system and inform that system that the cardholder is carrying out a transaction. The central computer verifies the cardholder's account and determines if the transaction is permissible given certain factors such as the cardholder's current balance.

While these cards are very useful, they are limited in the amount of information they store on the magnetic stripe. Additionally, most of these cards are used to only provide information to a card reader and are generally not used to receive information. In other words, the magnetic stripes on many cards only provide identification and financial data and do not receive and store more dynamic data. This fact is typically true for cards used in most American transaction machines which do not write data to the magnetic stripe. Transaction machines operated in other countries by other banks do write certain types of data to the magnetic stripe on a card, but again, this data writing function requires the utilization of a card writer that magnetizes the necessary portions of the magnetic stripe.

An improvement upon this type of card is the addition of an integrated circuit (IC) to a card which has a magnetic stripe. The IC provides additional memory beyond the magnetic stripe and is more dynamic than the magnetic stripe. Thus, as cardholders use their cards, the information stored in the IC part of the card can be read and written over relatively easily.

Both the traditional magnetic stripe card and the magnetic stripe card with IC are useful but suffer from three drawbacks. The first is the manner in which both receive information from computer systems. Presently, many of such cards must be placed into some physical reader type device that must come into contact with either the magnetic stripe or the IC. Through these physical contact points, information stored in the magnetic stripe or IC can be read into the reader type device. While it is noted that some applications exist for using IC cards that can receive data without contact points, the present applications of these contactless IC cards is very limited to transmitting and/or receiving data in very limited areas. An example of a contactless system is RAPID TOLL where a person's IC card is debited as the card is driven through a toll plaza. The value represented by the card is only altered in the vicinity of the toll plaza.

Second, the cardholder must also use a reader device in order to retrieve information stored in the card. A conventional card cannot provide information to the user as a stand alone device from either the magnetic stripe or the IC.

Third, the conventional cards cannot receive data from the user in a stand alone format. A user must use a separate terminal to enter data. The separate terminal must also have a device for engaging either the magnetic stripe or the contact points of the IC.

United states Patent No. 5,339,239, issued to Manabe et al., shows a system which utilizes two forms of memory cards. The first is an IC card and the second is a prepaid card or a credit card. This system requires a card holder to use two cards for some transactions. Additionally, the card holder also must use a station with two card readers to obtain from and write information to these cards.

United States Patent No. 5,566,327, issued to Sehr, describes a system which changes the data stored in an IC on a card during the course of a visit to an amusement park. This allows the card holder to compile multiple transactions onto one card and it also allows the amusement park to compile data on various parameters regarding a visitor's trip through the amusement park. Each transaction performed by the card holder is "registered" into the IC and the park's database by using the card readers. Thus, in order to use their cards, card holders must insert their cards into card readers.

### SUMMARY OF THE INVENTION

The present invention solves the problems listed above by providing a system and method that a cardholder uses to access data and make transactions using a stand alone device that is approximately the size of a credit card.

More specifically the present invention provides advantages to cardholders not realized in prior art cards. For example, the card and system of the present invention allows the transmission and reception of specific messages to certain cardholders. By targeting specific messages to specific cardholders, a more efficient system exists to market products and services to select individuals, remind select individuals of upcoming or forgotten events and provide updated information.

An example of a specific message to a specific cardholder includes sending the message "Your Loan has Been Approved" to the individual whose loan gets approved that day. By transmitting this message directly to that cardholder, the loan recipient need not call in to ask the status of the loan and a paper letter indicating that the loan has been approved also does not need to be sent from the financial institution. Similar messages are also possible for other things such as status of check orders, deposits and wire transfers. In addition, reminder messages such as "Your Car Payment Is Due By 6/30/98" or "Your Paycheck Was Automatically Deposited Today, The Funds Are Now Available" are also compatible with the present invention.

In addition to these messages, some cardholders may also receive summary messages, say at the end of every week, for certain accounts. Thus, a cardholder is able to keep track of an account more often instead of having to wait for the summary at the end of the month. A different cardholder who invests routinely in speculative or overseas markets and is interested in regular price and market quotes would receive these price and market quotes periodically, say every hour, to assist him in his investments. This service could be provided as a courtesy to a valued customer or the card provider may offer this service for a small fee, For an overseas investor, who receives price and market quotes, the system of the present invention holds the quotes at odd hours and provide them to the cardholder when he wakes up, as an automatic service, to deliver the messages at 7:00 am every business day, or to hold them until the cardholder asks for them. In this manner, the cardholder does receive 24 hour messages but is not interrupted by them when he is sleeping.

Another advantage of the present invention is the broadcasting of messages to several cardholders at one time, For example, a bank may use the systems and methods described to advertise or describe new products like "Integrated Savings and Investing Plan" or to inform a plurality of cardholders of special deals like "Auto Loans Are At An All Time Low" in an effort to promote car loans. In addition to these broadcast messages, advertising for other companies such as "Use This Card To Purchase Airline Tickets From Company X and Receive A $50 Rebate" or "Purchase Athletic Wear From Company Y With This Card During The Month Of August And Receive An Additional 5% Discount" are also compatible with the present invention.

Another advantage of the present invention is the interaction of the various components of the card. In an appropriate reader, trends can be detected and result in faster service for the cardholder. For example, if the present invention is realized onto an Automated Teller Machine (ATM) card, the system of the present invention learns that the cardholder typically withdraws $120 every Friday for weekend money. This trend is stored either on the card or a database and used to short circuit the process of withdrawing money from an ATM. Thus, a cardholder who has developed this trend will be prompted with the "Withdraw $120 From Checking Account" immediately after his PIN is verified without having to go through a plurality of other screens and options.

The present invention also provides advantages to other types of cards such as bar code scannable cards like those used at supermarkets. In this application, the bar code scannable symbol is used to keep track of a buyer's spending habits. For example, the buyer may have his bar code scannable symbol scanned every Saturday. This indicates a pattern that the buyer shops on Saturdays. The institution sends out messages to the card via a wireless network on Fridays informing the buyer of specials that will be available on Saturday. In this manner, the message is sent close enough to the buyer's normal shopping day such that he will remember the special and will be more likely to make that purchase.

Similarly, a general sale on various products may also be broadcast to a plurality of shoppers so as to announce the special. For instance, a special on product X may be sent to all buyers or perhaps a select number of buyers to promote the sale of product X.

The present invention is comprised of a card containing a magnetic stripe, an IC which includes memory and processing capability, a microtouch screen for interfacing with the IC and a wireless communications sub-system which communicates information to and from the IC.

### BRIEF DESCRIPTION OF THE DRAWINGS

The accompanying drawings, which are incorporated into and form part of the specification, illustrate preferred embodiments of the present invention and together with the description, disclose the principles of the invention. In the drawings:

Figure 1 is a schematic view of a card according to a preferred embodiment of the present invention.

Figure 2 is a front view of a card according to a preferred embodiment of the present invention.

Figures 3a and 3b are back views of cards according to a preferred embodiment of the present invention.

Figure 4 is one example of a card reader.

Figures 5a-5d are views of an auxiliary unit according to a preferred embodiment of the present invention

Figure 6 is a wallet according to a preferred embodiment of the present invention.

Figures 7 and 8 are systems for transmitting data to a card in accordance with a preferred embodiment of the present invention.

Figure 9 is a flowchart for receiving a message by the card according to a preferred embodiment of the present invention.

Figure 10 is a flowchart for replying to a message with the card according to a preferred embodiment of the present invention.

Figure 11 is a view of an embodiment of the card of the present invention in which a split-screen on the microtouch screen is shown where the cardholder may use a keyboard to type a message.

Figure 12 is a flowchart for beginning a use of the card in accordance with an embodiment of the present invention.

Figure 13 is a flowchart for the cardholder to manage messages in accordance with an embodiment of the present invention

Figures 14 and 15 are views of the card with specific functionality being displayed on the microtouch screen in accordance with an embodiment of the present invention.

Figure 16 is a flowchart for the cardholder to manage financial transactions in accordance with an embodiment of the present invention.

Figure 17 is a view of the card with a the microtouch screen displaying a financial transaction operation in accordance with an embodiment of the present invention.

Figure 18 is a flowchart for the cardholder to control operational parameters of the card in accordance with an embodiment of the present invention.

Figure 19 is a flowchart for controlling when and how the cardholder receives certain types of messages in accordance with embodiments of the present invention.

### DETAILED DESCRIPTION OF THE INVENTION

### The Card

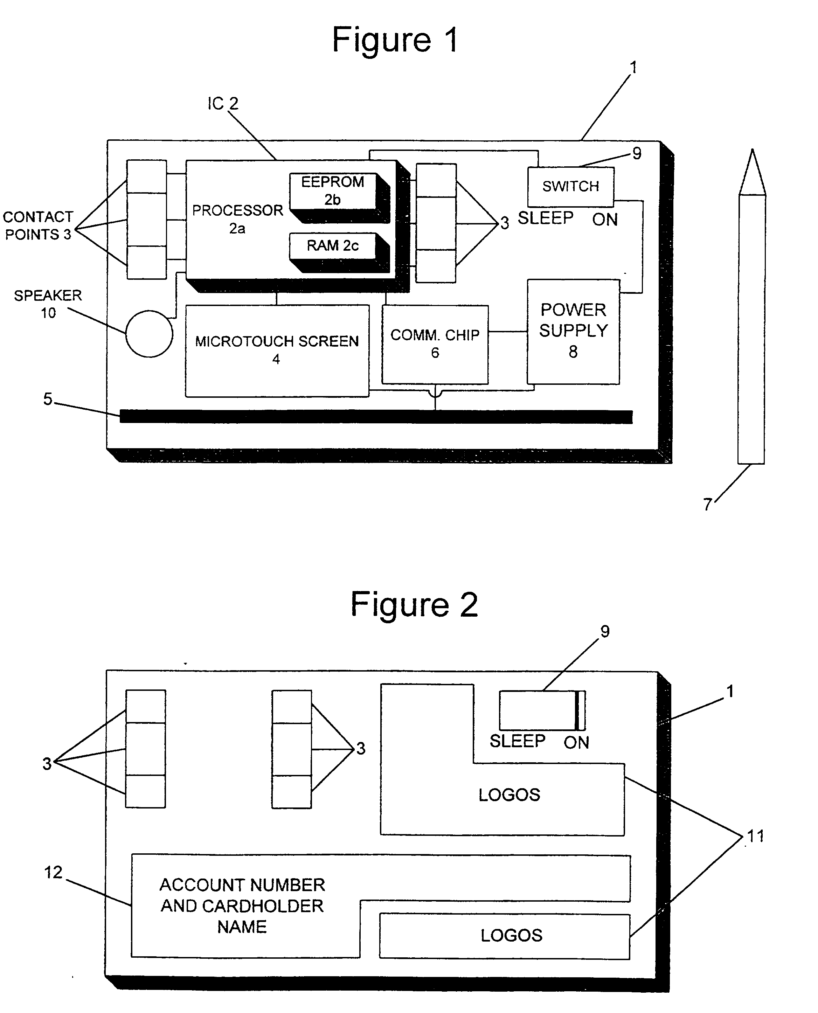

Figure 1 is a schematic diagram of the internal circuitry of a card in accordance with a preferred embodiment of the present invention. A standard plastic card 1, such as an automatic teller machine (ATM) card, credit card, or any other card which can be used to hold data, is implemented with an integrated circuit (IC) 2. The IC 2 contains a microprocessor 2a and memories 2b and 2c. The IC 2 is engaged by a reader via contact points 3. The IC 2 transmits data to and receives data from a microtouch screen 4. The IC 2 is also coupled to a communications chip 6. The communications chip 6 is an interface for communicating signals to and from an antenna 5 and IC 2 and it performs standard functions such as demodulating/decoding and amplification. A cardholder interfaces with the IC 2 via the microtouch screen 4 via a small stylus 7. Switch 9 allows the cardholder to toggle the card between "ON" and "SLEEP." This switch allows the cardholder to place the card into an inactive, sleep state and conserve power or to turn the card on to perform various functions when needed. Piezoelectric speaker 10 provides audio signals to the cardholder and is powered via IC 2 as signals are output to it Also included is a power supply 8, to provide the card with power. It should be noted that IC 2 is turned ON by either moving switch 9 to the "ON" position, in which case power is routed to IC 2 via switch 9, or when a signal for the card 1 is detected by communications chip 6, power is routed from power supply 8 to IC 2 (this is equivalent to waking-up the card 1 from its "SLEEP" state).

In one embodiment, the power supply 8 includes microthin battery technology. Preferably, the microthin battery is rechargeable via contact points 3. Thus, when a cardholder inserts his card into a transaction machine, the contact points 3 are engaged. Two of the contact points are power contacts and are coupled to the power supply 8 (connection not shown) so as to recharge the microthin battery.

In another embodiment of the present invention, the power supply 8 receives power from a radio frequency (RF)field. In this embodiment, the antenna receives the RF power signals and the power supply 8 harnesses the power within those signals and stores the power for utilization by other components of the card 1. An example of this type of technology is shown in U.S. Patent Number 5,736,728 to Matsubara, which is incorporated by reference.

A final embodiment of the power supply includes solar cells and a microthin battery (not shown). The cardholder leaves his card exposed to light for some specified, minimum amount of time per day or week as power is needed The solar cells convert the light energy into electrical energy and store this energy in the microthin battery for utilization by the other components of card 1.

Figure 2 is an external, front view of a card in accordance with a preferred embodiment of the present invention. Contacts 3 are visible and are engaged by a reader to exchange data with IC 2. In spaces 11, corporate logos such as those of the institution that issued the card, co-branded companies like airlines and the credit card service like VISA™ are placed. In space 12, a raised number corresponding to the account associated with card 1 and name of the cardholder are placed.

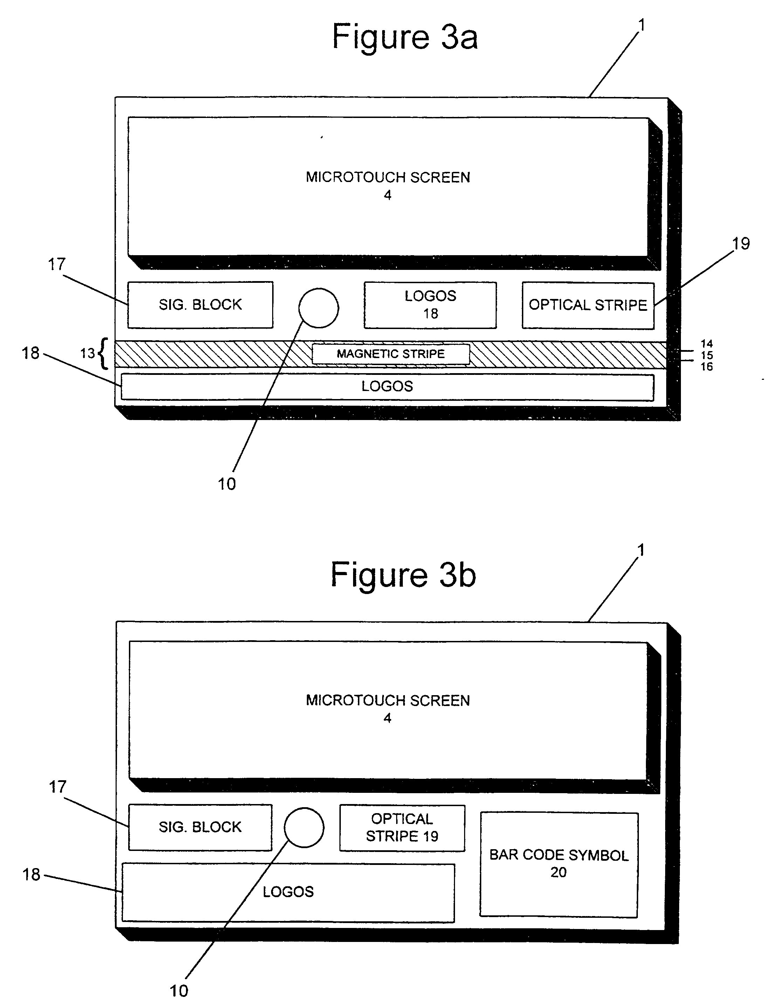

Figure 3a is an external, back view of a card in accordance with a preferred embodiment of the present invention. Card 1 contains a magnetic stripe 13 which contains three tracks 14-16. Typically, two of the tracks are used in U.S. banking transactions while all three tracks are used in international transactions. As mentioned earlier, two tracks are used to provide information to the transaction machine while the third track has data written onto it in many non-United States transaction machines.

In addition, signature block 17 is provided so the cardholder may sign the card. Space 18 contains additional corporate logos as well as customer service information such as a mailing address for bills and a telephone number for calling customer service representatives. An optical stripe 19 is placed on the back of this embodiment of card 1 for storing massive amounts of data. The optical stripe 19 is typically read in a reader device that uses a laser and a detector to read the pits and valleys or the darker vs. lighter areas of the optical stripe 19. Microtouch screen 4 is also placed on the back of this particular embodiment. It should be noted that a preferred embodiment of this type of card is approximately 2 1/8" by 3 3/8" by 1/32" thick with a microtouch screen size of approximately 1 1/16" by 3 1/8". In addition, the microtouch screen 4 is flexible to withstand a certain degree of bending that occurs in everyday life and is comprised of liquid crystal display (LCD). Speaker 10 is also placed on the back of this embodiment of card 1.

Figure 35 is the back side of another embodiment of a card in accordance with another preferred embodiment of the present invention. Card 1 contains the microtouch screen 4 and a UPC symbol or other bar code scannable symbol 20 which is scanned by a bar code reader. In much a similar manner as to the card with the magnetic stripe 13 in the other embodiment, the bar code scannable symbol 20 informs an institution, such as a supermarket, about the card holder. In addition, signature block 17, logo space 18 and optical stripe 19 are also provided as in the embodiment of Figure 3a.

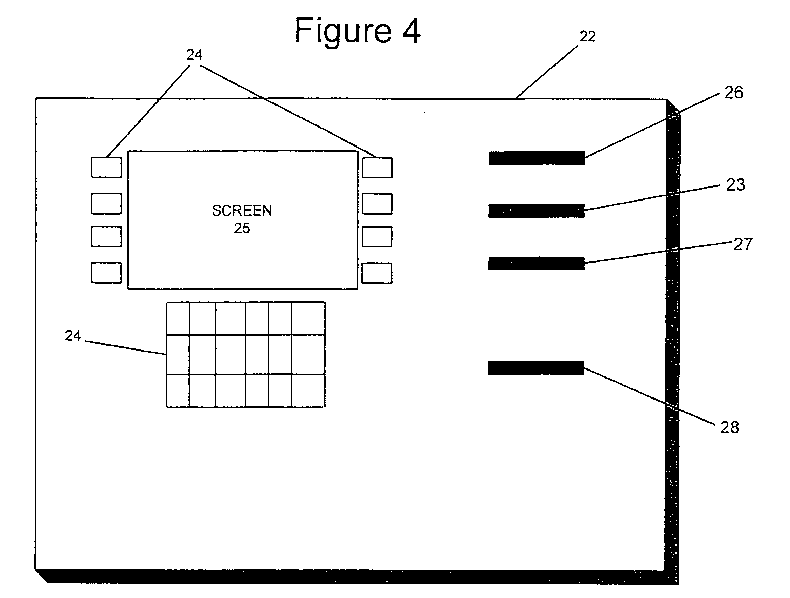

Figures 4-6 are three examples of other devices that interact with the card of the present invention. Figure 4 is a typical automatic teller machine (ATM) or customer access terminal (CAT) 22. The cardholder inserts card 1 into slot 23 and the ATM/CAT 22 engages either the magnetic stripe 13, the IC contacts 3, or both. In other types of ATM/CAT/reader devices 22, the bar code scannable symbol 20 and/or the optical stripe 19 are also read. The cardholder performs transactions such as a cash withdrawal, adding money to the amount stored on the IC 2 or a balance inquiry among others. The cardholder uses keypads 24 to enter dollar amounts and request specific transactions. Prompts for the cardholder to read are displayed on screen 25. Receipts are printed and dispensed via slot 26. Money or other valued media, such as lottery tickets, postage stamps, phone vouchers, is output via slot 27. Deposit envelopes containing money or checks are inserted in slot 28 in some models for making deposits.

Of particular interest to this type of device is its coupling to other networks. Thus, a cash withdrawal using the magnetic stripe 13 requires the ATM/CAT 22 to obtain the balance of the cardholder's account so that the cardholder does not overdraw on his or her account. Whether the connection to the network is via a hardwire or a wireless link is irrelevant to the present invention. One example of a wireless ATM/CAT device is described in copending United States Patent application serial number 09/163,309, filed September 30, 1998, entitled "METHOD AND SYSTEM FOR ELECTRONICALLY DELIVERED AND SOFTWARE DEFINED FINANCIAL AND INFORMATION SERVICES FOR LARGE MOBILE PASSENGER CONVEYANCES" and incorporated by reference herein.

### Mobile Interacting Devices

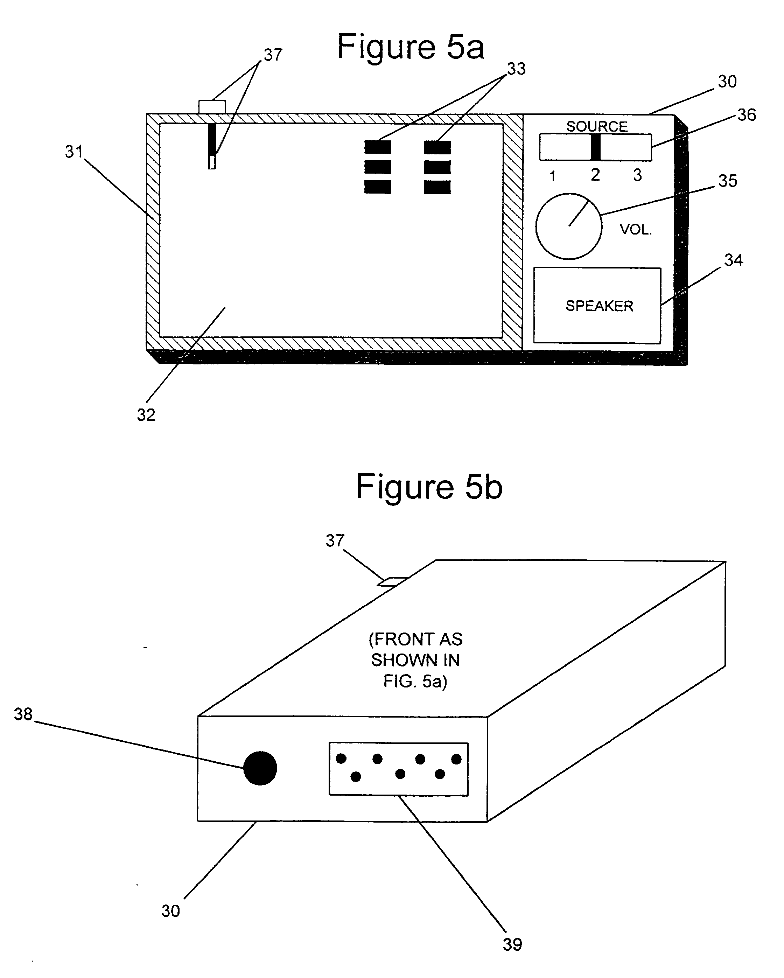

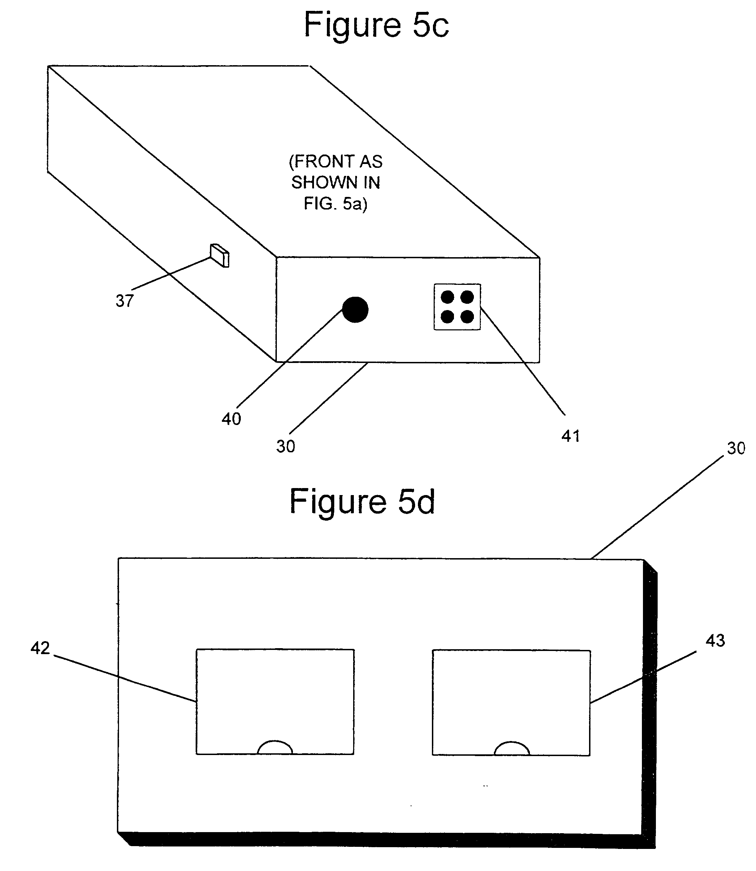

Figures 5a-5d are different views of an auxiliary or docking unit 30 in accordance with another preferred embodiment of the present invention. The auxiliary unit 30 is larger than card 1 so as to accommodate batteries and additional circuitry and is made of plastic so as to shock resistant and offer protection for card 1.

Figure 5a is a front view of auxiliary unit 30. Door 31 opens to receive card 1. Behind door 31 is a recess 32. The door 31 and recess 32 act together when the door is closed to keep card 1 in place. At the bottom of recess 32 are contacts 33 that engage contacts 3. Also on the front of auxiliary unit 30 are a speaker 34 that provides audio signals to the cardholder and volume control 35. Switch 36 controls the source of the signal being displayed on microtouch screen 4 of card 1. Typically, the sources include the antenna on card 1 itself or an external connection such as one from a personal computer. At the top of auxiliary device 30 is switch 37 that engages switch 9 on the front of card 1 when it is placed in recess 32. When card 1 is placed inside auxiliary device 30, the cardholder switches'the card 1 and auxiliary unit 30 combination from "ON" to "SLEEP" and vice-versa via switch 37 without removing the card from the auxiliary unit 30.

Door 31 has an opening (not labeled) so the cardholder has access to the microtouch screen 4 when card 1 is placed into auxiliary unit 30. This configuration is particularly advantageous so that the contacts 3 and switch 9 on the front of card 1 are engaged by auxiliary unit 30 while the microtouch screen 4 is accessible to the cardholder.

Figure 5b is a view of the right side of the auxiliary unit 30. In a preferred embodiment of the present invention, it has two connection points. Connection 38 is an auxiliary power input. This input is useful for obtaining power from a utility power source such as a 120 volt, 60 hertz adapter so that battery power is conserved while the cardholder is using card 1 with the auxiliary unit 30. Connection 39 is a data port Data port 39 allows the auxiliary unit/card combination to interface with a personal computer (PC) or other device.

Figure 5c is a view of the left side of the auxiliary unit 30. Connection 40 is an interface for coupling external speakers or headphones and is approximately the size of a headphone jack on a portable tape or CD player. Connection 41 is an input port compatible with an external audio or video player. This port allows the auxiliary unit 30 to receive audio and/or video signals and provide them to the cardholder via the speaker 34 and microtouch screen 4, respectively. Auxiliary unit 30, with its own processor, can be used to format and control data input directly into itself before forwarding it into card 1. In one example, if a combined video/audio signal is being input into the auxiliary unit 30, the audio signals can be processed separately from the video and output directly to speaker 34 while the video signals are routed to card 1 for display on microtouch screen 4.

Figure 5d is a view of the back of auxiliary unit 30. The back of auxiliary unit 30 has two doors 42 and 43. Door 42 opens so auxiliary unit 30 receives household batteries like AAA or 9-volt batteries (not shown). Door 43 opens so auxiliary unit 30 receives extra memory modules or co-processing chips (not shown).

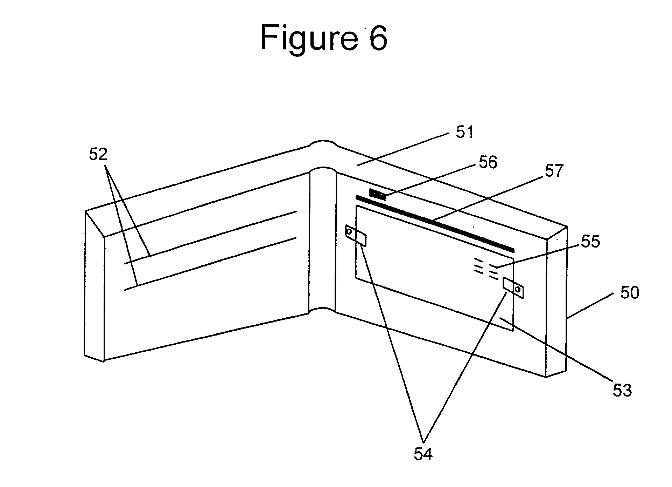

Figure 6 is a wallet 50 that is compatible with card 1 of the present invention. In many respects, it is very similar to a standard wallet in that it has a compartment 51 for holding paper money, pockets 52 for holding conventional plastic cards and pictures. Wallet 50 differs, however, in that card compartment 53 is specifically designed for holding card 1 of the present invention. First, card compartment 53 includes rigid members (not shown) to protect the card from mechanical stresses such as twisting and bending. Clips 54 hold card 1 in place while contacts 55 engage contacts 3 on card 1. Behind card compartment 53 is a battery compartment (not shown). Switch 56 engages switch 9 on the front of card 1 so that the cardholder may toggle card 1 between "ON" and "SLEEP" while the card is in wallet 50. Wallet 50 holds card 1 so that the cardholder has access to the microtouch screen 4 while providing power to IC 2 via contacts 3 and 55. While not shown in Figure 6, a data port for accepting a cable that is then coupled to another device, like a PC, may also be integrated into wallet 50 so that data may be transferred to and from card 1 without removing it from the wallet.

ATM/CAT 22, auxiliary unit 30 and wallet 50 provide card 1 with enhanced capability by at least providing the card with more power via either batteries external to card 1 or transformed power from the power grid. This gives the cardholder the ability to perform more functions over a longer period of time with card 1 than might otherwise be possible if card 1 were strictly operating under its own power. In addition, these devices allow card 1 to interface with other devices that are not either wireless or operate using the contact points associated with smart card technology. Auxiliary unit 30 also provides additional co-processing power via additional chips inserted behind door 43 as does ATM/CAT 22.

### Systems and Methods for Using the Card

Before card 1 can be used, the prospective cardholder must request one from a card issuing institution and the card issuing institution must put initial data on card 1 before turning possession of it over to the cardholder.

The cardholder makes a formal request to receive card 1 from a card issuing institution such as a bank. Typically, this is done through a paper order form, an electronic order form (such as over the Intemet) or via a phone call to a customer service representative (CSR). Part of the request includes listing specific bank accounts and credit card accounts. The card issuing institution verifies the existence of these accounts and that the individual requesting the card is authorized to access them. Once this security measure is passed, card 1 is downloaded with the account numbers and routing information that will assist in getting messages to the particular computer that manages that account as well as other computers and servers. By downloading this information onto card 1, it will facilitate transactions with these accounts as is described later.

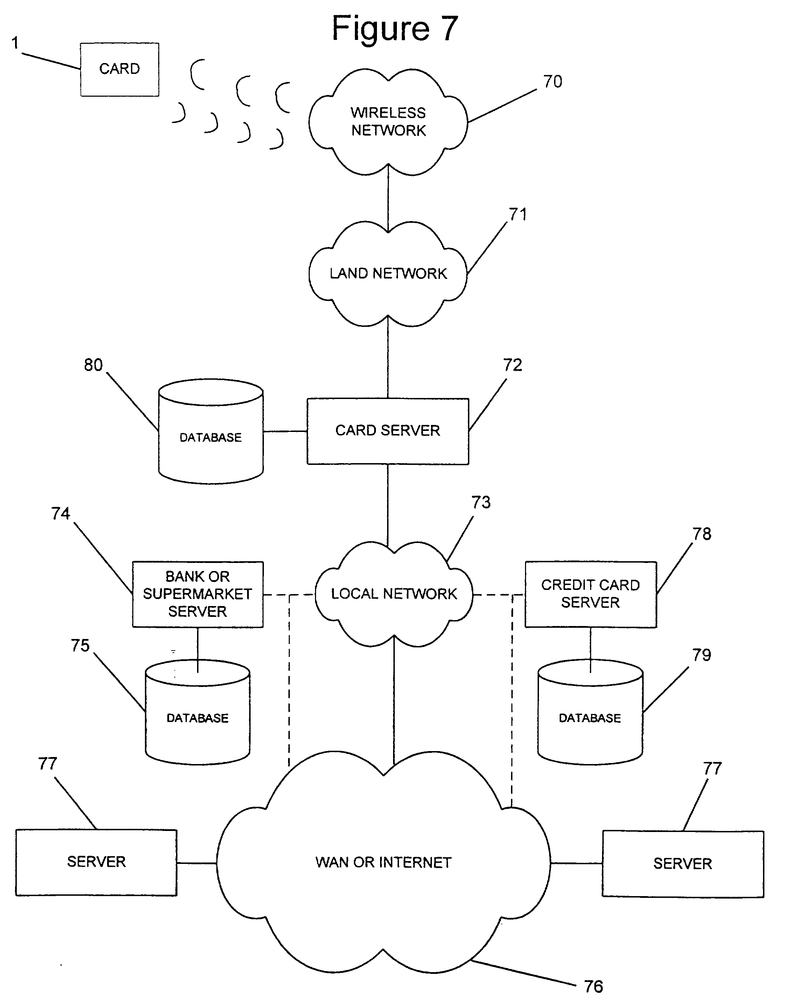

Figure 7 depicts a system in which card 1 of the present invention is used to receive and transmit messages and carry out transactions utilizing the card's wireless capabilities. Wireless functionality is also available when card 1 is placed in auxiliary unit 30 or wallet 50. Card 1 is coupled to wireless network 70 via wireless links. The wireless network typically contains towers and/or satellites for transmitting and receiving electromagnetic signals as well as switching and routing circuitry and computers to control all of the traffic. Land network 71 is coupled to the wireless network 70 and couples card server 72 to the wireless network 70.

Card server 72 supports much of the functionality and provides many of the services available on card 1 as will be described later. Card server 72 is coupled to a database 80 and a local network 73. Database 80 is used for tracking the usage of the cards, storing messages directed to other servers and to the card 1 and saving the operational parameters for each card 1. Local network 73 is coupled to a wide area network (WAN) or the Internet 76 which is coupled to various other servers 77 that provide information like news, stock quotes and Web page based information. One particular server, bank server 74, is coupled to either the local network 73 or the WAN/Internet 76. Bank server 74 is also coupled to database 75 which stores account information of various bank customers, including, but not limited to, those who own and use card 1. Also coupled to either local network 73 or WAN/Internet 76 is credit card server 78 which is in turn coupled to database 79. Database 79 holds data pertaining to credit card accounts. Server 78 and database 79 are shown in Figure 7 to be separate from server 74 and database 75. This separation represents a cardholder who has a credit card in accordance with present invention but maintains other accounts, like checking and savings, with another bank. If the cardholder were to have all financial instruments with one bank, server 78 and database 79 could be omitted.

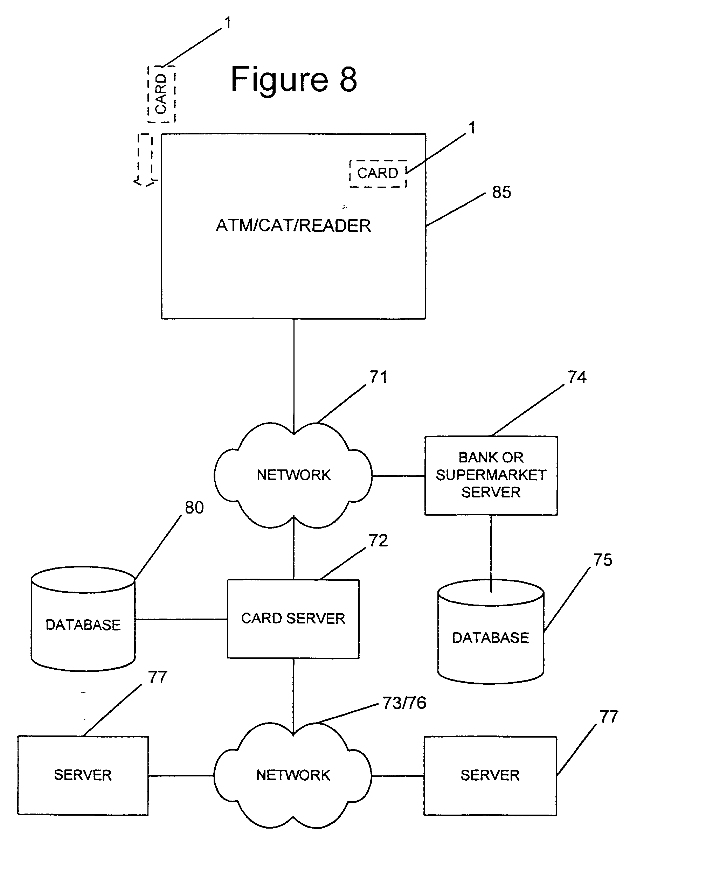

Figure 8 is a diagram of a system utilizing card 1 in a reader such as an ATM/CAT 22 or any smart card reader. Card 1 is physically engaged by ATM/CAT/reader 85. The coupling between ATM/CAT/reader 85 and card 1 can involve insertion of the card into the ATM/CAT/reader 85 or it may involve simply swiping the magnetic stripe 13, optical strip 19 or bar code system 20. Also, depending upon the construction of the ATM/CAT/reader 85, any combination of the following data sources and methods used to obtain data can be used; IC 2 via contacts 3, IC 2 via antenna 5, magnetic stripe 13, optical stripe 19 or UPC symbol 20. In addition, depending on the construction of the ATM/CAT/reader 85, data is also written onto the IC 2 via contacts 3 or magnetic stripe 10.

ATM/CAT/reader 85 is coupled to network 71. Network 71 is coupled to both card server 72 and bank server 74. As can be seen, the other connections of Figure 8 are similar to those of Figure 7 and their descriptions will not be repeated.

The systems shown in Figures 7 and 8 support card 1 to provide the cardholder with many functions. In general, these functions are categorized into three groups. The first group is the receiving of text information at card 1 for the cardholder to read and use. A cardholder may receive broadcast text messages intended for a wide variety of people or it may be a specified text message for an individual cardholder. The second group is transmitting text information from the cardholder to another device or person. In this group, the transmission may again be for a group of people or an individual and it may directed towards a computer, a server or other wireless device or any combination thereof. The third group encompasses both of the first groups and adds data transmission that affects any electronic data, such as any value or money, stored on the card.

While Figure 7 is shown to be a particular configuration, other optional configurations are possible without departing from the scope of the present invention. For example a router could couple card server 72 to both local and land networks 73 and 71, respectively. In this manner, if card 1 places the appropriate address in a header to permit direct transmission to server 77 or 74, then server 72 can be bypassed via this router. In addition, while four separate networks 70, 71, 73 and 76 are shown in Figure 7, they could be integrated into one, two or three networks without departing from the scope of the present invention. For example, in Figure 7, wireless network 70 could be directly coupled to local network 73 or WAN 76 and card server 72 could be coupled to only local network 73 or WAN 76 along with the other servers shown.

### Transmitting a Message to the Card

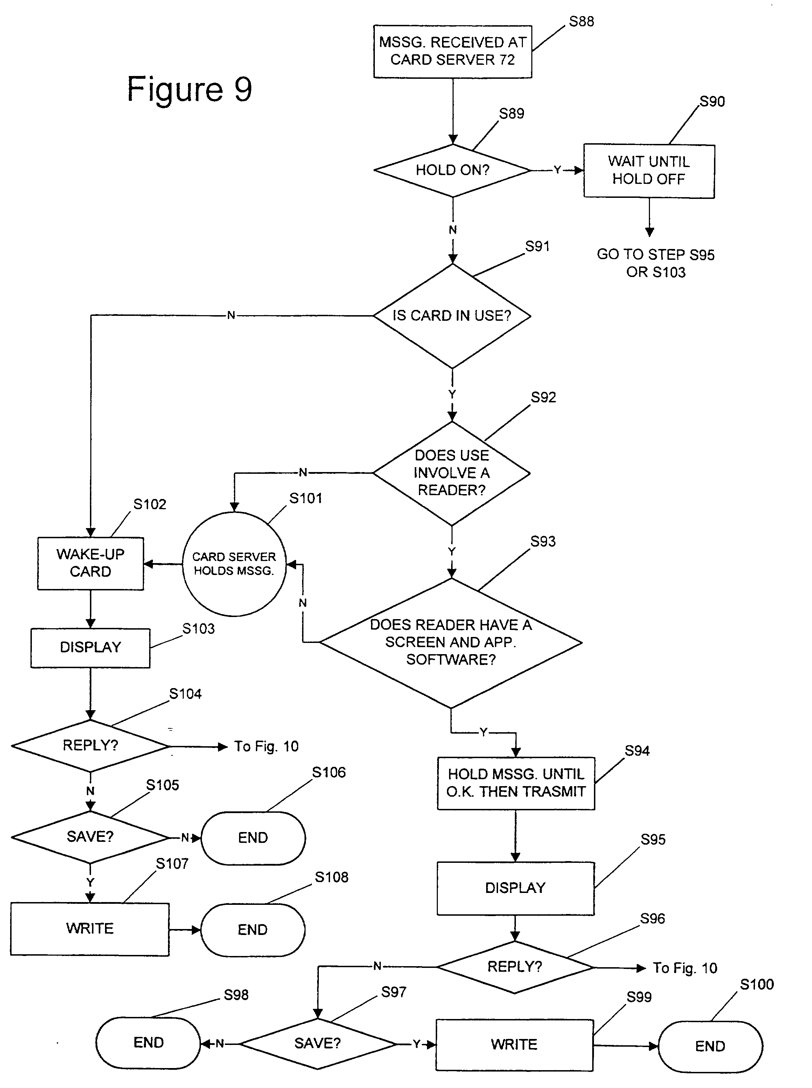

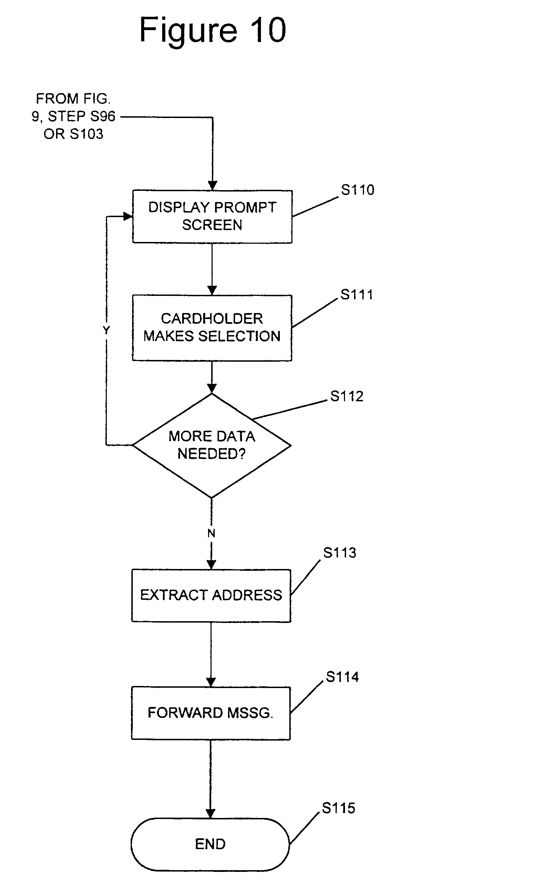

Figure 9 is a flow chart for a process representing sending a message to card 1. At step S88, a message for card 1 arrives at card server 72. The source could be another server 77 that is pushing information, like stock quotes, financially related information or advertisements for sales, to the cardholder via card server 72 or an individual using a device like a personal data assistant (FDA), a PC, a pager or another card 1. After card server 72 receives the message, it checks the operational parameters for that card to determine if the cardholder has placed a "HOLD" on his messages at step S84. If there is a "HOLD," the card server 72 saves the messages at step S90 until the cardholder removes the hold and reviews his messages at step S95 or S103. If card server 72 determines that there is no "HOLD" for this particular card, then at step S91, card server 72 reads a usage table listing the current cards that are currently in use. Thus, if the cardholder turns on card 1 to initiate sending a message, initiate a transaction or reconfigure operation parameters or if the cardholder inserts card 1 into a ATM/CAT/reader 85 or swipes it through such a reader or uses the account number via an Internet or telephone transaction, card server 72 receives a signal indicating the type of use, the type of device using card 1 and a card identifying number. By turning card 1 "ON" as a stand alone device, card server 72 receives a signal from card 1 it is being used. For the type of use of card 1 that involves using a ATM/CAT/reader 85 to pull data from the card or use of the account number via the Internet or over the telephone, the server such as 74 that authorizes the transaction will send a message directly to card server 72 indicating that card 1 is in use. The type of use, type of device (if any) and the card identifying number are placed into a table so that card server 72 can perform a quick check to determine if it can send the message now or later depending on whether or not card 1 is idle or if ATM/CAT/reader 85 can assist in delivering the message.

The importance of determining the status of the card's use is threefold. First, in many ATM/CAT/readers 85, the microtouch screen 4 is out of the view of the cardholder and thus unusable. Thus, the cardholder may receive a message, not see it and then the message is automatically erased after a predetermined period of time based upon operation parameters. Second, when used in conjunction with some ATM/CAT/readers 85, card 1 uses power provided to it via ATM/CAT/reader 85 and the ATM/CAT/reader network, instead of the card's wireless network, to communicate with other devices and servers. By displaying and replying to a message using the card/ATM combination instead of using the card in a stand-alone capacity, power within a battery-powered embodiment of card 1 is conserved In other words, ATM/CAT/reader 85 assists card 1 in its power needs and performs transactions and messaging functions without requiring Withdrawal of card 1 from ATM/CAT/reader 85. Third, by knowing the use status of card 1, collisions are avoided. Typically, if the card is inside a ATM/CAT/reader 85, the cardholder is extracting or providing information from and to card 1. Since card 1 is currently performing one messaging or transaction function, the receipt of an incoming message at the same time could result in a collision and faulty operation of delivery of the message, the transaction or both.

If at step S91, card server 72 determines that card 1 is in use, it then determines if card 1 is being used in conjunction with a ATM/CAT/reader 85 or if it is being used in a stand alone or quasi-stand alone fashion at step S92. The quasi-stand alone function includes using card 1 in conjunction with auxiliary unit 30 or wallet 50 as it is the card's wireless capabilities above that connects it to the rest of the network. (Assuming auxiliary unit 30 or wallet 50 is not coupled to a network via a PC or similar device.) If the card server determines that card 1 is in use in conjunction with a reader, it then determines if ATM/CAT/reader 85 has a screen and has the proper software to handle messages and certain transaction functions at step S93. If ATM/CAT/reader 85 has a screen and the proper software, card server 72 holds the message until there is a convenient time in which the message can be forwarded to card 1 at step S94. In other words, card server 72 allows the transaction already in progress to continue until the message can be transmitted without error.

When the message can be transmitted to the cardholder, card server 72 directs the message over network 71 of Figure 8 to ATM/CAT/reader 85 at step S94. ATM/CAT/reader 85 receives the message and displays it for the cardholder at step S95 on its own screen. At step S96, ATM/CAT/reader 85 prompts the cardholder on whether or not he wishes to reply to the message just received If he does, the reply message is constucted and transmitted using the appropriate software stored on ATM/CAT/reader 85 and network 71 as is described in conjunction with Figure 10. If he does not wish to reply to the message at step S96, ATM/CAT/reader 85 prompts the cardholder on whether he wishes to save the message onto the card's IC 2 at step S97. If the cardholder does not wish to save the message, the process ends at step S98 with the message being automatically erased.

If the cardholder decides to save the message at step S97, ATM/CAT/reader 85 writes it into EEPROM 2b at step S99 and the process ends at step S100.

If at step S93, card server 72 determines that ATM/CAT/reader 85 does not have a screen or the required messaging software, card server 72 holds the message at step S101 until the cardholder is done with the current transaction and has withdrawn his card 1 from ATM/CAT/reader 85. When the card is otherwise freed-up, card server 72 clears the corresponding entry from the usage table and forwards the message to card 1 along the appropriate networks of Figure 7. At step S102, the communications chip 6 receives the message and seads a signal to processor 2a based on the presumption that the cardholder has just completed a transaction and has not yet begun a new one. At step S103, the message is displayed on the microtouch screen 4 to the cardholder and an audio signal is sent to speaker 10 informing the cardholder he has just received a message. The process continues at steps S104-S108, as described above, where the card holder chooses to reply or not as previously described. What distinguishes steps S95-S100 from steps S103-S108 is in steps S103-S108, microtouch screen 4 and wireless communication are used while steps S95-S100 used the ATM/CAT/reader 85 network(s) and terminals for data entry and reception.

Returning to step S92, if card server 72 determines that card 1 is not currently being used with ATM/CAT/reader 85, then it is known that card 1 is being used either as a stand alone device or in conjunction with auxiliary unit 30 or wallet 50. In addition, the "not in reader" determination, but having the card in use, encompasses using the card in a more passive mode such as swiping the magnetic stripe 13 or reading either the bar cede symbol 20 or optical stripe 19. Whether the cardholder is using the microtouch screen 4 to generate a message or transaction, is having a passive memory medium being read for a purchase or using the account number to make a purchase over the Internet or via a telephone ordering system, the fact remains that card 1 is currently unavailable and the message should be held until after the current use is over to avoid collision. Thus, the message is stored at card server 72 at step S101 as described earlier. The process continues at step S102 and beyond as described above when card 1 is available to receive the message.

If card 1 is not in use at all as determined at step S91, card server 72 forwards the message to card 1 at step S102 as described above.

It should be noted that some messages, such as broadcast news messages, do not allow for replies. For these messages, control flags are set in a header section of the message such that the computer in ATM/CAT/reader 85 or processor 2a, depending on how the message is displayed, automatically answers "NO" at steps S96 and S97 or S104 and S105 so the cardholder never gets to choose these options. Many other messages will not have these options and therefore the cardholder can issue reply messages.

Figure 10 is a flowchart of the process for replying to a received message. As noted above, there are several message types a cardholder may receive. A simple broadcast message such as "Chicago Bulls Win Game 3: 98-87" does not require a response. A simple text message such as "When are you coming over tonight? - Steve" only requires a text response such as "9:00 - Joan." A message that is a combination of both text and data, such as "Company XYZ's stock is at $10.00 a share. Do you wish to make a purchase?" contains the text of the displayed phrase as well as the data representation of the value of the stock ($10.00) and the name of the company (XYZ).

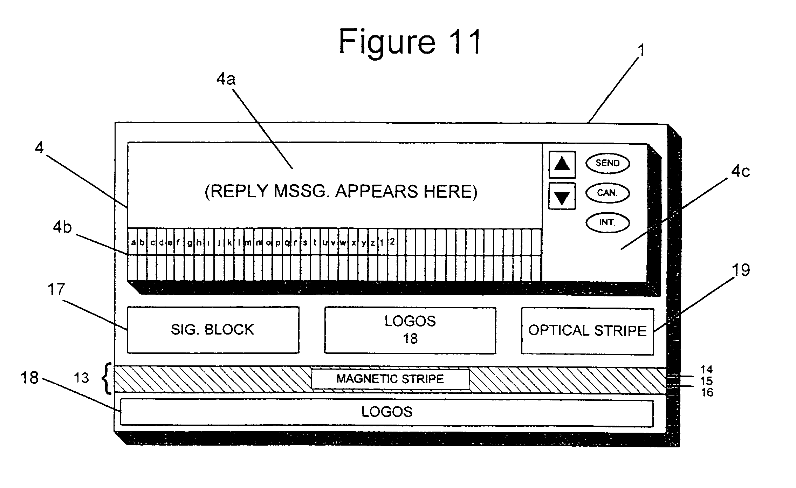

If the cardholder uses card 1 to write the reply and the reply only requires text, the microtouch screen 4 displays a blank space 4a and a keyboard 4b so that the cardholder may watch as he types out his message as shown in Figure 11 (it should be noted that not all characters are shown in Figure 11 for the sake of clarity). Space 4c is for control keys such as scrolling, interrupt, cancel and send. Card 1 displays the keyboard and space at step S110 of Figure 10. The cardholder types and edits his message until he his satisfied and hits the send button at step S111.

At step S112, the IC 2 determines if more data is needed. For a text reply, the answer is "No" and the IC 2 extracts the address of the source of the original message from the header of the original message at step S113. At step S114, the IC 2 packages all of the relevant data and forwards it on to the reply recipient via the communications chip 6, antenna 5 and card server 72. The process ends at step S115.

For more complicated messages, such as purchasing stocks, a series of messages are transmitted between card 1 and card server 72. First the offer to purchase shares of stock is displayed at step S110. If the cardholder wishes to purchase shares, he replies by hitting the "Yes" button in control area 4c at step S111. Another message is displayed asking him "How many do you want to buy?" at step S110 because processor 2a determines more data is needed The cardholder types in a number and card 1 either performs the calculations or it forwards the information to card server 72 to determine that buying x number of shares at y dollars a piece results in a total bill of z = xy. The microtouch screen 4 then displays the total and asks the card holder if this total is acceptable at step S110. If the card holder says "Yes" at step S111, the cardholder is then prompted to state which account is supposed to be used to pay for this purchase at step S110. The cardholder selects one from the list provided, a check for the appropriate amount of funds is completed, and if there is enough money, a message requesting the purchase is transmitted at step S114 after the appropriate address is extracted at step S113.

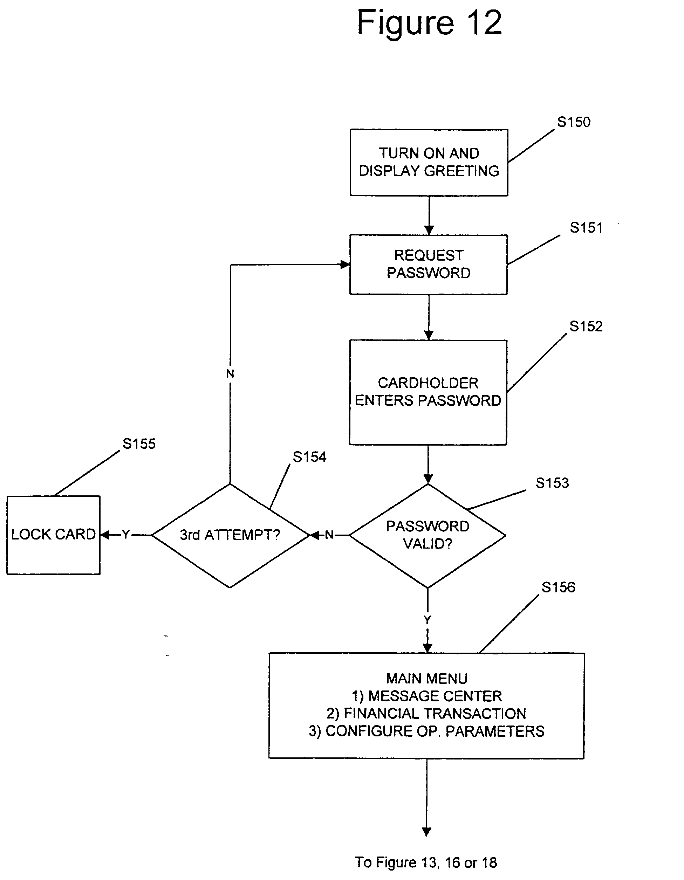

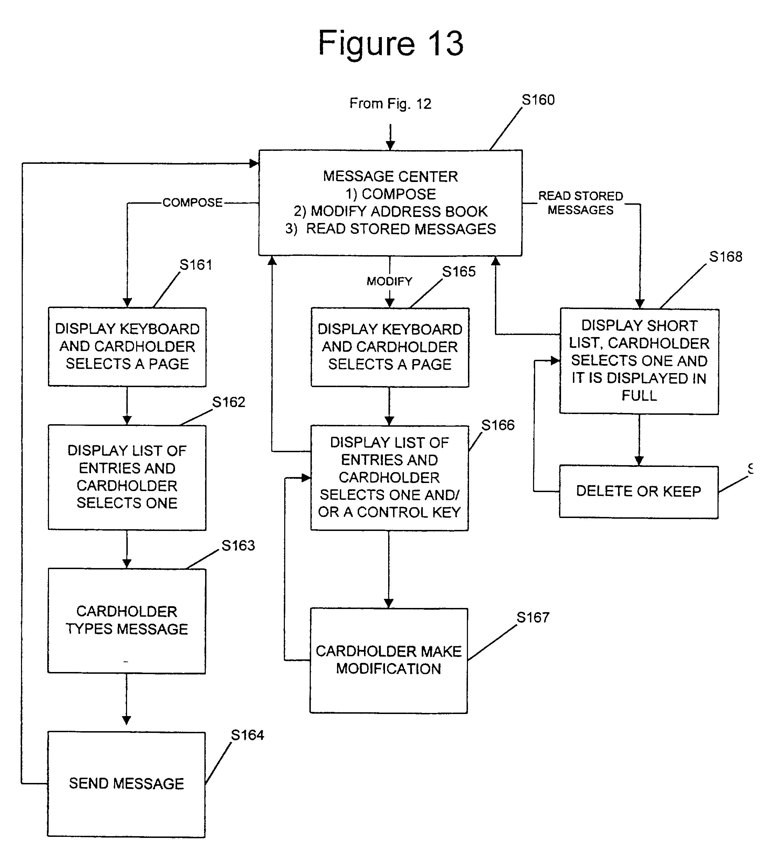

Figure 12 shows a process in which the cardholder initiates actions with his card. It again should be noted that the card could be used in conjunction with auxiliary unit 30 or wallet 50 and this is a quasi-stand alone operation similar to the stand alone operation in that the card's wireless communications facilities are needed to connect with other computers and systems. At step S150, the cardholder uses switch 9 to turn card 1 on. After processor 2a has booted-up, a greeting is flashed onto the microtouch screen 4. This greeting will typically include names of companies associated with the manufacture of the card and maintenance of the network as well as associated financial institutions. At step S151, a split screen, as shown in Figure 11, is displayed on the microtouch screen The top half of the screen displays a prompt such as "Enter Your Password" and a blank space and the bottom half contains the keyboard. At step S152 the cardholder enters a password and hits the "Send" button At step S113, the processor 2a checks the entry against the password stored in EEPROM 2b. If the entered password is determined to be invalid at step S153, the processor 2a determines how many failed attempts have been tried at step S154. If this is the third failed attempt, a message is sent to card server 72 alerting it to potential fraudulent use and the monetary value is either locked into the card until released by a message from card server 72 or the value is automatically transferred to another, preassigned account such that the value on the card becomes 0 at step S155. If it is not the third failed attempt, the cardholder is prompted again to enter the password at step S151.

If at step S152 a valid password is entered, a first options menu is displayed to the cardholder at step S156. The main menu includes such options as "Message Center," "Financial Transactions," and "Configure Operation Parameters."

If the cardholder selects "Message Center" at step S156, the microtouch screen 4 changes to display the message center menu at step S160 of Figure 13. This screen displays options such as "Compose," "Modify Address Book" and "Read Stored Messages."

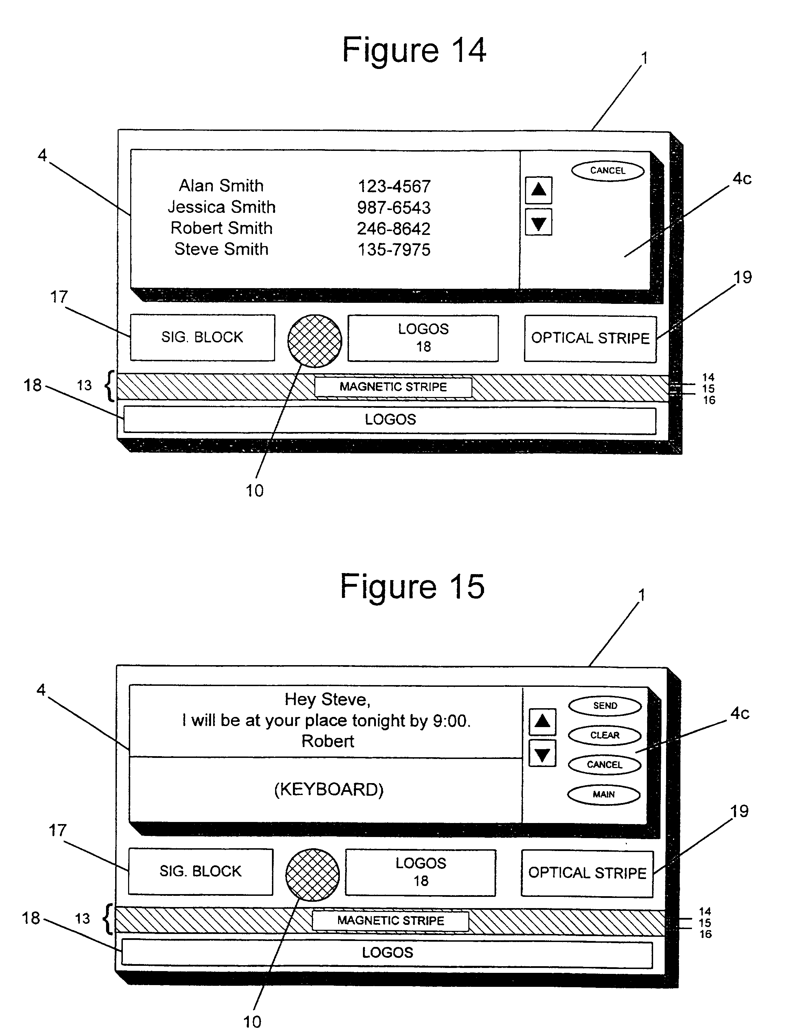

If the cardholder selects the "Compose" option, the process continues at step S161 where a split screen like that of Figure 11 is displayed and the cardholder is prompted to "Select The Page Of The Recipient." This is like an electronic address book where to find Mr. Jones you must look in the J's. After the cardholder selects a page at step S161, the microtouch screen displays a single screen of a list of names along with their access numbers as shown in Figure 14. Also at step S162, the cardholder scrolls through the list and selects the name of the recipient by touching the name with stylus 7. After the selection of the recipient, the cardholder is presented with a split screen like that of Figure 15 where he types in the message at step S163. The cardholder may read, scroll through and edit the message as it appears in the top portion of the screen After the cardholder is satisfied that the message is satisfactory, he hits the "Send" button at step S164 to forward the message to the recipient. After the message is transmitted to card server 72 over the required networks, where it is rerouted to the recipient, the card returns to the "Message Center" menu screen of step S160.

If at step S160, the cardholder selects to "Modify The Address Book," the process goes to step S165 where the cardholder is prompted to select a page as was done at step S161. After the cardholder makes his selection at step S165, the list of names on that page are listed as shown in Figure 14 with special control burtons in the control section 4c of the microtouch screen.

If the cardholder hits the "Add" button (not shown), a screen like Figure 11 is displayed where the cardholder types in the name and access number of the person at step S166. Once the cardholder is satisfied, he hits the "Send" button at step S167, the entry is added to EEPROM 2b and the process returns to step S166 where the cardholder may make more adjustments to the list.

If the cardholder selects a specific name entry by touching it with stylus 7 and hits the "Modify" button (not shown) at step S166, he is then prompted, via a screen like that of Figure 11, to change either the name of the person or the access number. Once the cardholder is satisfied with the modifications, he hits the "Send" button in the control section 4c of the microtouch screen 4, the change is made in EEPROM 2b and the process returns to step S166. Deleting an entry is the same as the "Modify" operation except the cardholder simply selects the entry, hits "Delete," is prompted once to be sure he wants to delete this entry and then the entry is deleted from EEPROM 2b and the process returns to step S166. When the cardholder has finished modifying the address book, he hits the "Cancel" button and is returned to the message center menu of step S160 from step S166.

If at step S160, the cardholder selects to "Read Stored Messages," the microtouch screen 4 displays a short list of messages stored in EEPROM 2b at step S168. The short list contains the date and time the message was received, the sender's name and the first few words of the message. The cardholder selects one of the listed messages to see the message in its entirety at step S168. The cardholder then selects to either "Delete" this message or return to the short list at step S169. The message is then either deleted and the cardholder returns to the short list again or instead the cardholder simply returns to the short list without deleting an entry at step S168. The cardholder may also hit the "Cancel" button at step S168 to return to the "Message Center" screen of step S160.

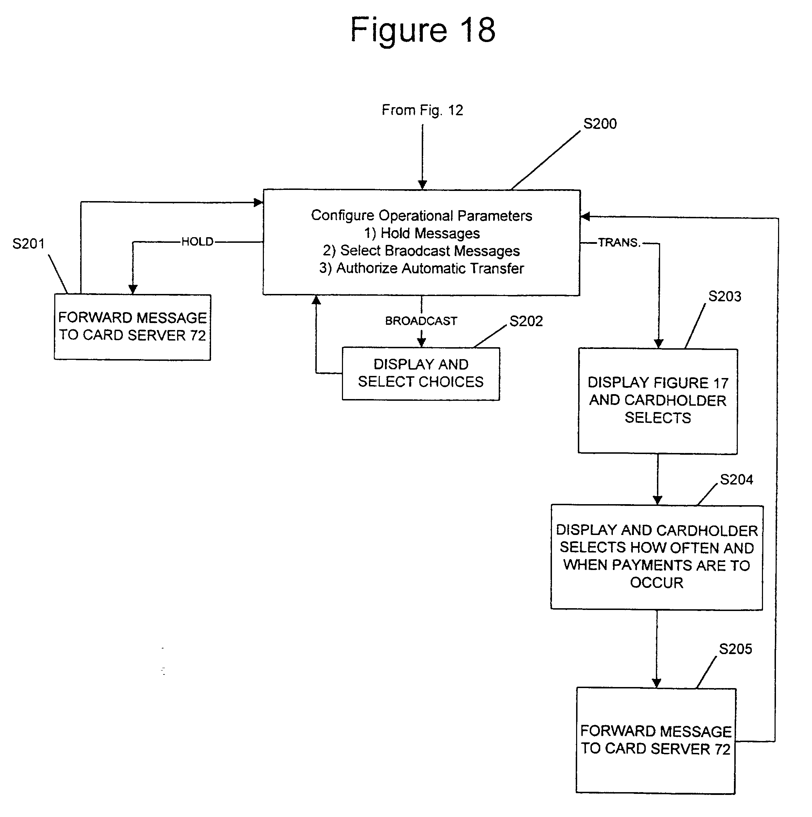

An alternative embodiment of reading stored messages, or a plurality of messages held at card server 72, is to provide the message in its entirety to the cardholder when he calls for them either at step S160 of Figure 13 or when he removes the "Hold" as is described later in conjunction with Figure 18. Regardless of where the messages are held, either on card 1 or at server 72, they are presented to the cardholder one at a time in their entirety and he hits a control button like "Next" or "Delete" to stop viewing the current message and start reviewing the next message. The next message is then either downloaded from memory on card 1 to microtouch screen 4 or a control message is sent from card 1 to card server 72 requesting that the next message be transmitted for display on microtouch screen 4.

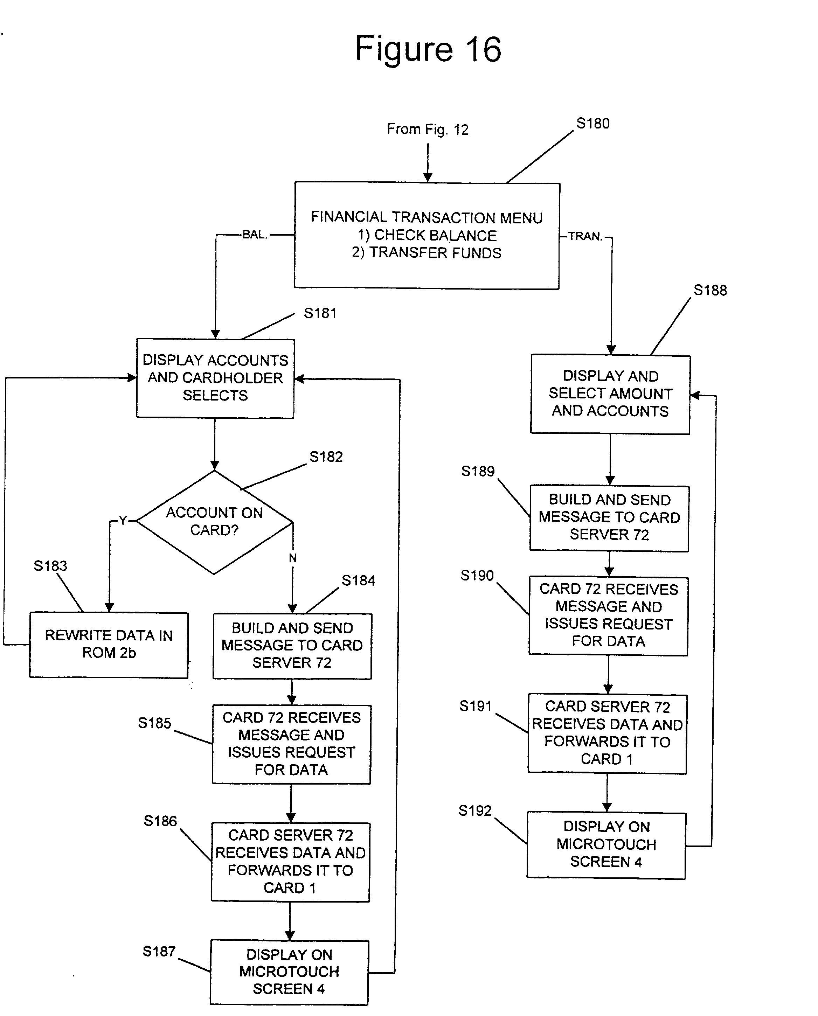

Returning to Figure 12, if at step S156, the cardholder selects "Financial Transactions," the process continues on Figure 16 where a transactions menu is displayed giving the cardholder options such as "Check Balances" and "Transfer Funds" at step S180.

If the cardholder selects "Check Balances" at step S181, the microtouch screen 4 displays all of the accounts the cardholder listed when he first requested the card. It should be noted that this list can be updated by having the card server 72 push a data update to card 1 at a later time upon request from the cardholder. Also at step S181, the cardholder selects one of the listed accounts.

At step S182, the processor 2a determines if the account is on the card 1, such as electronic money or other electronic value that is stored in EEPROM 2b, or if it is off the card 1, such as a checking account. If it is determined that the account of interest is on the card, processor 2a reads the amount from EEPROM 2b and displays it to the cardholder at step S183. The cardholder then hits the "O.K." button in control section 4c and the process renturns to step S181 where the cardholder selects another account. It should be noted that memory 2b may also be comprised of non-volatile RAM in alternative embodiments of the present invention.

If at step S182, it is determined that the account in question is not on the card, then at step S184 the processor 2a retrieves a standard request for data message from EEPROM 2b, specializes that message by inserting an identifier for the specific account, and forwards it to card server 72 over the various networks. Card server 72 receives the request, translates the request into a format appropriate for the various networks and servers that will carry the request and issue the appropriate reply message, and then forwards the translated request at step S185. The card sever 72 receives the reply from the appropriate server, repackages the data and transmits it to the card 1 at step 186. At step S187, the card 1 displays the information and the cardholder 1 hits the "O.K." button to return to step S181.

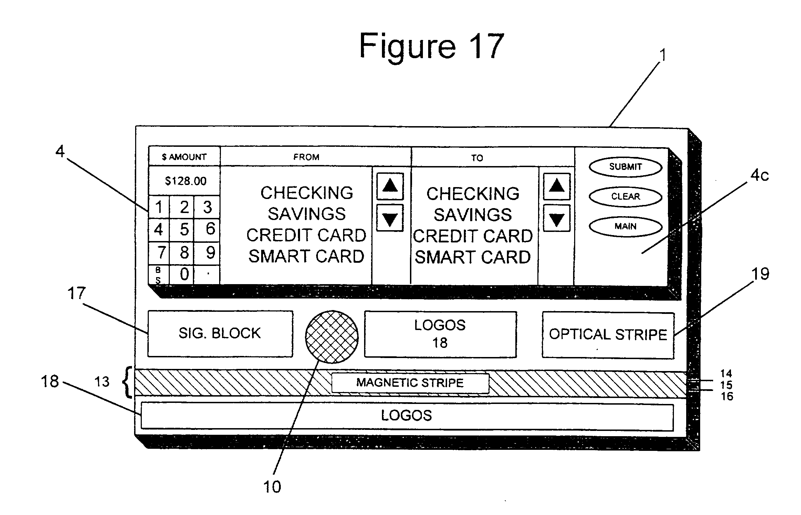

If at step S180, the cardholder selects to "Transfer Funds" the process continues at step S188 where the microtouch screen 4 displays the screen shown in Figure 17. At step S188, the cardholder uses the shown keypad to enter an amount of transfer, and from which account the money is to be transferred and to which account it is going. A typical transaction, in this example, is to transfer S128.00 from a checking account to the card 1 on the day the cardholder has his paycheck deposited into his checking account so that he may use card 1 for purchases instead of writing checks. It is also assumed that if the card 1 stores more than one account in EEPROM 2b, the transfer of value from one such account to another is a trivial matter of moving data in EEPROM 2b and the details of which are incidental to the scope of the present invention.

However, many transactions will involve moving money from/to the card and to/from an account held on a server such as 74. For these transactions, the processor 2a retrieves the required, standard message from EEPROM 2b, specializes it with account specific information and transmits it to card server 72 at step S189. At step S190, the card server receives the message request from card 1, translates the request into a format appropriate for the various networks and servers that will carry the request and provide a reply, and then forwards the translated request to the appropriate server. The card server 72 receives the reply from the appropriate server, repackages the data, and transmits it to the card 1 at step 191. At step S192, the card 1 displays a message indicating whether or not the transfer was successful and the cardholder 1 hits the "O.K." button to return to step S188.

It should be noted that error checking is performed at various points in the process described above so that the cardholder may not transfer more money off of his card than is currently available. In addition, limits on transfers may also be imposed so that if the card 1 is used for fraud, the potential liability is reduced.

It should be noted that the cardholder may also hit a "Cancel" button in control section 4c to return to step S180 at any time during these processes or a "Main" button shown in Figure 17 to return to the display of step S156 of Figure 12.

If at step S156 the cardholder selects to adjust his system parameters by hitting the "Configure Operational Parameters" button, the display on the microtouch screen 4 changes to list options such as "Hold Messages," "Select Broadcast Message Source(s)," and "Authorize Automatic Deposits" at step S200 of Figure 18.

If the cardholder hits the "Hold Messages" button, a prestored message is retrieved from EEPROM 2b and transmitted from card 1 to card server 72 at step S201. Card server 72 stores all incoming messages, including broadcast messages, until the cardholder returns to step S200 at a later time and hits "Hold messages" on microtouch screen 4. Taking the hold off also involves transmitting a prestored message to card server 72 at step S201. The cardholder will know if messages are being held depending on the look of the "Hold Messages" on the microtouch screen 4 (i.e., white letters on dark background, hold is on; black letters on white background, hold is off). After the hold is enabled or disabled, the process returns to step S200.

If at step S200 the cardholder hits the "Select Broadcast Messages" button, the microtouch screen 4 displays a list of potential sources at step S202. Potential sources might include local news headlines, national news headlines, international new headlines, economic headlines, sports headlines, specific stock quotes, or he may opt for no broadcast messages by hitting the "None" button. The cardholder hits as many of the sources as he desires. If the cardholder hits the stock quotes option, then the microtouch screen 4 displays five empty boxes along with the keyboard. The cardholder then enters the stock symbol used to designate those stocks and tabs to the next empty box. When the cardholder has entered all of his selected stocks, he hits the "Done" button.

For non-stock broadcast messages (i.e. headlines); pre-stored messages are forwarded to card server 72. Card server 72 maintains a large database of cardholders and their desires for broadcast messages. At a predetermined time everyday, card server 72 requests data from the appropriate server 76 and pushes it to the correct cards 1 using a data table that correlates cards with types of broadcast messages.

With stock broadcast messages, card server 72 makes more specific requests of the appropriate server, or obtains a massive data dump at the end of the day and searches through the data to retrieve only those stock quotes of interest to certain cardholders, packages this data with the appropriate addresses in the appropriate headers and forwards the packets.

If at step S200, the cardholder selects to authorize an automatic transfer, the process continues at step S203 where the financial transaction screen of Figure 17 is displayed and the cardholder makes his selections. For example, he may select to transfer $128 from his checking account onto card 1. After the cardholder has made his selection, the microtouch screen 4 displays options for the cardholder to chose from at step S204. For example, the microtouch screen 4 prompts the cardholder on how often (*i.e*. once a week or once a month) and when he wishes to have the transfer take place (*i.e.* every Friday or the 1st of every month). Other options may reside on balances such as transferring any fluids in excess of $1,000 from a checking account into a savings account whenever the balance of the checking account is above $1,000. After the cardholder has made his selection(s) at step S204, the appropriate message(s) are retrieved from EEPROM 2b, specialized for the requested accounts, and forwarded to card server 72. Card server 72 monitors the conditions and will initiate the transfer in accordance with specifics provided by the cardholder. Once the transfer request message(s) are forwarded to card server 72 from card 1, the process returns to step S200 where the cardholder may change other operation parameters. Finally, it should be noted that the cardholder may return to the main menu of step S156 from step S200 by hitting the "Main" button.

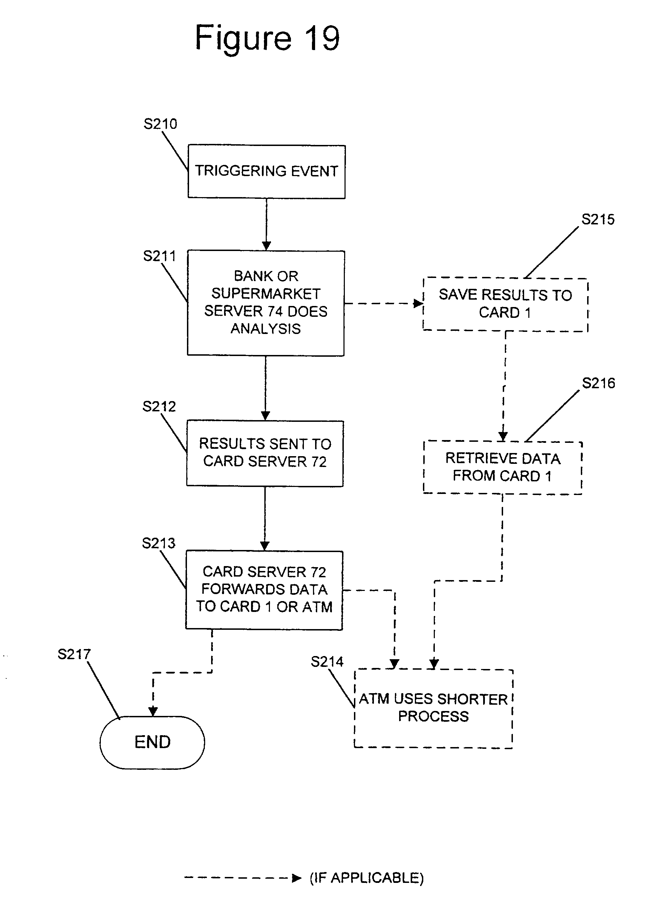

Figure 19 is a process for another embodiment of the present invention. At step S210, a triggering event occurs such as use of card 1. This use could be the swiping of the magnetic stripe 13 at an ATM/CAT/reader 85 so as to withdraw money from an account. In conjunction with Figure 8, network 71 forwards this swiping action to bank server 74 to determine if the PIN entered by the cardholder and the amount the cardholder eventually requests, coincide with the stored PIN and the balance available.

At step S211, bank server 74 does an analysis of activity for this particular card 1 in an effort to predict what the cardholder may ask for in services. For example, if it is Friday, this cardholder may request $120 from his checking account for weekend spending money as he has done in the past. The bank server 74 performs an analysis of past activity and then forwards a request for a specific message that, based on the results of step S211, includes the data indicating the amount of $120 and the utilization of the checking account, to card server 72 at step S212. The card server then formats a message for this cardholder so as to take control of the ATM/CAT/reader 85 and forwards it to the ATM/CAT/reader 85 that the cardholder is currently using via network 71 at step S213. At step S214, the ATM/CAT/reader 85 displays the specialized message "Do you wish to withdraw $120 from your checking account?" and thereby eliminating the unnecessary steps of first having the cardholder request an amount and then an account and thus save the cardholder some time in making this transaction.

In another embodiment, bank server 74 performs its analysis at step S211 and forwards the results to the card 1 for storage (the transmission may be through network 71 or network 70) at step S215. At step S216, the results are read from card 1 at the next transaction and the cardholder is offered a shorter process at step S214 as described above.

This process is also useful for bar code scannable cardholders. For example, the process of Figure 19 could also be initiated by having a clock register a particular time, such as every Friday at 6:00 pm. When this time arises at step S210, the supermarket server 74 could scan its database 75 to determine 1) what sales there will be on certain products for this week and 2) based on the correlation of items purchased by cardholders and the scanning of their bar code scannable symbols the probability that these cardholders will be interested in these sales items at step S211. In other words, supermarket server 74 will determine which cardholders will potentially be interested in this week's sale items. When the supermarket server 74 has finished this determination, it forwards this data to card server 72 at step S212.

When the card server 72 receives this data at step S212, it formats messages for each cardholder selected by supermarket server 74 and sends the messages to these cardholders telling them which items are on sale at step S213. The process ends at step S217.

While the above description has been referenced to the preferred embodiments, it should be understood by one of ordinary skill in the art that obvious variations are possible within the scope of the present invention. For instance, any type of plastic card may be used such as debit cards, credit cards, travel cards, entertainment cards, payroll cards, EBT cards, phone cards, etc. traditionally, the wireless communications may be analog or digital and may be based on cellular, FM or satellite service.

Additionally, while Figure 1 sbows six contact points 3, other embodiments envisioned by the present invention include eight or ten contact points.

It should also be noted that the present invention is usable in both push and pull technologies. For example, the broadcasting of news stories could happen for all cards in one area and only those cards that are "ON" at that time would receive the news and display it to the cardholders. Those cards in the "SLEEP" mode would not receive the news broadcast and it would not be saved at the card server 72 for retrieval or rebroadcasting later. In other words, in order to receive the news headlines, the cardholder must have his card "ON" in one embodiment of the present invention.

In another example using pull technology, the broadcast news could be stored at card server 72 and retrieved by those cards that are in "SLEEP" mode at a later time when the cardholder turns his card 1 on. In this embodiment, the cardholder is pulling the information to his card 1 when it is convenient for him receive it

While it has not been discussed in any detail in the specification above, it should be noted that the present invention is compatible with all forms and methods of clearing, settling and using certificate authorities for transactions.

## Claims

1. A card for performing messaging functions and financial functions comprising:
an integrated circuit comprised of a processor and at least one memory; and
a screen for displaying first data from the integrated circuit to a cardholder.

2. The card of claim 1 further comprising:
communications hardware that receives first wireless signals, converts the first wireless signals into electrical signals and forwards the electrical signals to the integrated circuit.

3. The card of claim 2, wherein the first wireless signals include the first data and the first data comprises text.

4. The card of claim 3, wherein the text comprises an advertisement.

5. The card of claim 3, wherein the text comprises a reminder.

6. The card of claim 2, wherein the first wireless signals include the first data and second data where the first data comprises text and the second data is stored in the integrated circuit.

7. The card of claim 2, wherein the first wireless signals include second data that is stored in the integrated circuit.

8. The card of claim 1, wherein the financial functions involve electronic value stored in the integrated circuit.

9. The card of claim 1, wherein the financial functions involve transferring an amount of value between a first value stored on the integrated circuit and an account holding a second value.

10. The card of claim 2, wherein the financial functions involve transferring an amount of value between a first value stored on the integrated circuit and an account holding a second value, wherein the amount of value is transferred via at least one wireless signal.

11. The card of claim 2, wherein the screen is a touchscreen that generates input data.

12. The card of claim 11, wherein the communications hardware transmits second wireless signals.

13. The card of claim 12, wherein the second wireless signals include a portion of the input data and the input data comprises text.

14. The card of claim 12, wherein the second wireless signals include a portion of the input data and the input data is operational parameter data.

15. The card of claim 12, wherein the first data includes text and second data that together comprise an offer to purchase a good, service or commodity.

16. The card of claim 15, wherein a reply to the offer is generated via the touchscreen.

17. The card of claim 16, wherein an electronic value is removed from the integrated circuit in conjunction with the reply.

18. The card of claim 1, wherein the card is coupler to a mobile device that provides support to the card.

19. The card and mobile device of claim 18, wherein the mobile device provides power to the card.

20. The card and mobile device of claim 18, wherein the mobile device is a wallet.

21. A method of transmitting a first message to a wireless smart card including a microtouch screen from a first party comprising:
forwarding the first message to a card server from the first party;
transmitting the message to the wireless smart card; and
displaying the message on the microtouch screen.

22. The method of claim 21, wherein the first message is text.

23. The method of claim 21 further comprising:
transmitting a reply message from the wireless smart card to the first party.

24. The method of claim 21, wherein the first party is a computer.

25. The method of claim 21, wherein the first party is a person.

26. The method of claim 25, wherein the first person uses a second wireless card including a microtouch screen to centre the message.

27. The method of claim 21, wherein the first message contains both text and data.

28. The method of claim 27, wherein the text and data form an offer for a good, service or commodity.

29. The method of claim 28, wherein a reply to the offer is generated using the touchscreen on the wireless smart card.

30. A messaging system comprising:
a wireless smart card that inlcudes a touch screen for displaying at least one first message;
a wireless network; and
a card server that is coupled to the wireless smart card via the wireless network for transmitting or receiving the at least one first message to or from the wireless smart card.

31. The messaging system of claim 30 further comprising:
an automated teller machine coupled to the wireless smart card via another network for transmitting and receiving second messages to and from the wireless smart card.

32. The messaging system of claim 31, wherein the at least one first message is transmitted to the automated teller machine for display by the automated teiler machine instead of on the touch screen.

33. The messaging system of claim 29, wherein a message comprises text.

34. The messaging system of claim 30 wherein a message comprises text and card.

35. The messaging system of claim 32 where the text and data together form an offer for a good, service or commodity.

36. The messaging system of claim 35 where an acceptance or declination of the offer is made via the automated teller machine.
